(19) Europäisches Patentamt
European Patent Office
Office européen des brevets

(11) Veröffentlichungsnummer: **0 286 971 B1**

(12) **EUROPÄISCHE PATENTSCHRIFT**

(45) Veröffentlichungstag der Patentschrift: **29.07.92**

(51) Int. Cl.$^5$: **C09B 44/18**, C09B 67/22, D06P 1/08

(21) Anmeldenummer: **88105503.2**

(22) Anmeldetag: **07.04.88**

Die Akte enthält technische Angaben, die nach dem Eingang der Anmeldung eingereicht wurden und die nicht in dieser Patentschrift enthalten sind.

(54) **Kationische Diazacyaninfarbstoffe.**

(30) Priorität: **15.04.87 DE 3712822**
**07.07.87 DE 3722322**

(43) Veröffentlichungstag der Anmeldung:
**19.10.88 Patentblatt 88/42**

(45) Bekanntmachung des Hinweises auf die Patenterteilung:
**29.07.92 Patentblatt 92/31**

(84) Benannte Vertragsstaaten:
**CH DE FR GB LI**

(56) Entgegenhaltungen:
**EP-A- 0 036 505**
**DE-A- 3 602 587**
**US-A- 3 438 963**
**US-A- 4 364 738**

(73) Patentinhaber: **BAYER AG**

**W-5090 Leverkusen 1 Bayerwerk(DE)**

(72) Erfinder: **Brack, Alfred, Dr.**
**Auf dem Krahwinkel 7**
**W-5068 Odenthal(DE)**

EP 0 286 971 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind kationische Diazacyaninfarbstoffe der Formel

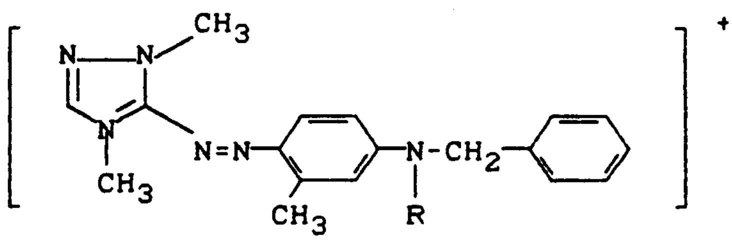

$X^-$ (I),

worin

R für Methyl oder Ethyl steht und

$X^-$ für ein farbloses Anion stehen,

ihre Mischungen mit den isomeren Farbstoffen der Formel

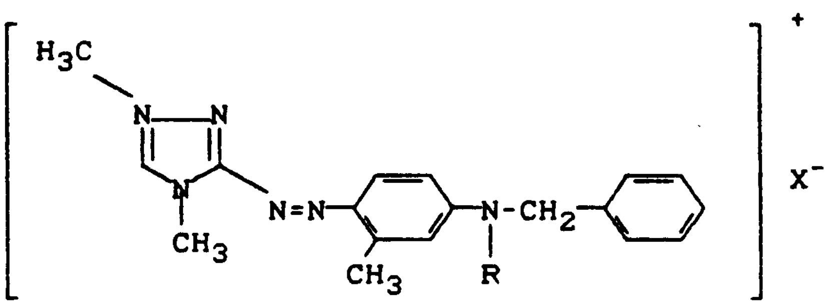

$X^-$ (II),

worin

R und $X^-$ die vorstehend angegebene Bedeutung haben,

sowie Verfahren zum Färben von Polyacrylnitril und Polyacrylnitril-Wolle-Mischungen unter Verwendung dieser Farbstoffe.

Bevorzugte Anionen sind Methosulfat, Hydrogensulfat, Chlorid, Bromid und Chlorozinkat.

Kationische Diazacyaninfarbstoffe, die durch Kupplung von diazotiertem 3-Amino-1,2,4-triazol mit einem Alkyl-benzyl-anilin und anschließende Quaternierung erhalten werden und beispielsweise aus den US-Patentschriften 2 883 373 und 3 438 963 bekannt sind, werden in großem Umfang zum Färben von Polyacrylnitril eingesetzt. Sie sind jedoch gegen hydrolysierende und reduzierende Einflüsse im Färbebad nur begrenzt stabil. Insbesondere beim Färben von Polyacrylnitril/Wolle-Mischungen führen derartige Einflüsse zur teilweisen Zerstörung des Farbstoffes. Die aus der EP-A-0036505 bekannten Farbstoffe unterscheiden sich von den erfindungsgemäßen Farbstoffen durch das Fehlen eines Methylsubstituenten in der Kupplungskomponente und zeigen ein unbefriedigendes färberisches Verhalten.

Es wurde nun überraschend gefunden, daß die Farbstoffe der Formel (I) und ihre Mischungen mit den Farbstoffen der Formel (II) im Vergleich zu den bekannten Farbstoffen eine hohe Stabilität im Färbebad besitzen und sich ausgezeichnet zum Färben von Polyacrylnitril in Polyacrylnitril-Wolle-Mischungen eignen. Außerdem zeichnen sich die Methosulfate der erfindungsgemäßen Farbstoffe durch ein gutes Kristallisationsvermögen aus. Sie bleiben auch ohne den bei den genannten vorbekannten Farbstoffen notwendigen Zusatz von Zinkchlorid beim Lagern rieselfähig, so daß die unerwünschte Belastung der Färbereiabwässer durch Zinkionen vermieden wird. Andererseits sind diese Methosulfate in Essigsäure-Wasser-Mischungen hervorragend löslich, so daß auf dieser Basis lagerstabile konzentrierte Flüssigmarken in sehr wirtschaftlicher Arbeitsweise hergestellt werden können. Deshalb sind die Farbstoffe I mit X = $CH_3SO_4^-$ besonders wertvoll.

Die Herstellung der Farbstoffe (I) (X = $CH_3SO_4^-$) erfolgt in bekannter Weise durch Methylierung der zugrundeliegenden Azobasen mit Dimethylsulfat. Dabei entstehen auch isomere Farbsalze, die sich durch die Stellung einer Methylgruppe im Triazolring unterscheiden. Die bei der Methylierung mit Dimethylsulfat entstehenden Methosulfate der Formel (II) X = $CH_3SO_4^-$) können durch ihre mit sinkendem pH-Wert stark ansteigenden Wasserlöslichkeit von den Hauptisomeren, die meist einen Anteil von >80 % darstellen, leicht abgetrennt werden. Für die meisten Anwendungsbereiche ist jedoch diese Trennung nicht erforderlich und

die Mischung der beiden Isomeren einsetzbar.

Die Herstellung der Farbbasen bzw. ihrer Hydrogensulfate kann vorteilhaft durch Simultankupplung in Schwefelsäure mit wäßriger Natriumnitritlösung erfolgen. Es ist aber auch möglich, in bekannter Weise in Eisessig/Schwefelsäure- oder Phosphorsäure-Mischungen mit Nitrosylschwefelsäure zu diazotieren. Die Isolierung der Farbbasen bzw. eines Hydrogensalzes läßt sich vermeiden, wenn man die Simultankupplung mit Natriumnitrit in Essigsäure vornimmt und anschließend mit Dimethylsulfat methyliert. Dabei ist kein Alkalizusatz erforderlich. Es genügt das aus dem Natriumnitrit entstandene Natriumacetat. Man erhält so in einfacher und durch die hohe Raum/Zeit-Ausbeute wirtschaftlicher Arbeitsweise gebrauchsfertige Lösungen der Methosulfate. Gewünschtenfalls können aus diesen Lösungen durch Zugabe von beispielsweise Zinkchlorid oder Natriumbromid auch Farbsalze mit anderen Anionen $X^-$ abgeschieden und isoliert werden.

Beispiel 1

46,5 g 3-Amino-1,2,4-triazol werden in einer Mischung aus 225 g konz. Schwefelsäure und 100 g Wasser gelöst. Dann gibt man 112,5 g N-Ethyl-N-benzyl-m-toluidin zu und rührt, bis die Lösung homogen ist. Sodann tropft man im Verlauf von ca. 50 min. die Lösung von 35 g Natriumnitrit in 100 g Wasser bei 15-20 °C durch ein möglichst tief eintauchendes Rohr zu. Nach etwa 4 h läßt man - anfangs unter Kühlung - bei etwa 20 °C 1000 g Wasser zutropfen. Nach mehrstündigem Rühren kristallisiert das Hydrogensulfat der Formel

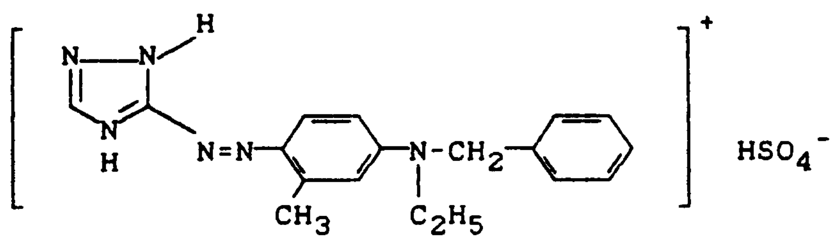

aus. Man erhält durch Absaugen einen Preßkuchen, der 124-125 g trockene Azobase enthält. Der Preßkuchen wird feucht wie folgt weiterverarbeitet:

Die 185 g trockener Azobase entsprechende Menge wird mit soviel Wasser verrührt, daß insgesamt 370 g Wasser vorliegen. Zur Vermeidung von Klumpenbildung werden unter guter Kühlung bei maximal 5 °C 30,8 g Magnesiumoxid eingetragen. Der pH-Wert soll 9,5-9,6 betragen. Bei 0-5 °C tropft man im Verlauf von 2 h 185 g Dimethylsulfat zu, rührt danach noch 4 h bei 0-5 °C und läßt die Temperatur dann auf Raumtemperatur ansteigen. Nach beendeter Methylierung (DC-Kontrolle) wird zum Zerstören restlichen Dimethylsulfats die Mischung etwa 1 h auf 60-80 °C erwärmt. Nach dem Erkalten setzt man 92,5 g Kochsalz zu und rührt bei Raumtemperatur, bis die Kristallisation vollständig ist. Man erhält 200 g feinkristallinen Farbstoff, der zu ≧ 80 % aus dem Farbstoff der Formel I mit R = $C_2H_5$ und X = $CH_3SO_4$ besteht. Bei dieser Arbeitsweise liegt der pH-Wert des Filtrates zwischen 0 und 0,2. Setzt man vor der Zugabe des Kochsalzes soviel Schwefelsäure zu, daß der pH-wert unter 1 sinkt, so kristallisiert der Farbstoff der Formel I (R = $C_2H_5$, X = $CH_3SO_4$) in praktisch reiner Form aus. $\lambda_{max}$ = 535 nm.

Verwendet man anstelle von N-Ethyl-N-benzyl-m-toluidin die äquivalente Menge N-Methyl-N-benzyl-m-toluidin, so erhält man bei sonst unveränderter Arbeitsweise den Farbstoff der Formel I mit R = $CH_3$ und X = $CH_3SO_4$.$\lambda_{max}$ = 526 nm.

Beispiel 2

84 g Aminotriazol werden mit 315 g Essigsäure etwa 10 min verrührt, wobei sich das Aminotriazol fast vollständig löst. Sodann werden unter guter Durchmischung die Lösung von 66,5 g Natriumnitrit in 105 g Wasser und 157,5 g N-Ethyl-N-benzyl-m-toluidin bei 10-15 °C so zudosiert, daß nur ein kleiner Nitritüberschuß entsteht. Die Nitritlösung wird durch ein Tauchrohr möglichst tief unter die Oberfläche eingebracht. Nach beendeter Simultankupplung erhöht man die Temperatur langsam auf 25 °C und tropft bei 25-30 °C 231 g Dimethylsulfat zu. Dabei ist leichte Kühlung erforderlich. Man rührt 4 h bei 30 °C, tropft nochmals 42 g Dimethylsulfat zu und rührt über Nacht bei Raumtemperatur. Danach ist chromatographisch kein Vorprodukt mehr nachweisbar. Zur Zerstörung restlichen Dimethylsulfats wird die Lösung 1 h auf 60-80 °C

erwärmt und warm filtriert. Man erhält 750 ml = 946,7 g lagerstabile Farbstofflösung.

Durch Zusatz von Zinkchlorid oder von salzsaurer Zinkchloridlösung läßt sich das Zinkchlorid-Doppelsalz bzw. Chlorozinkat, durch Zugabe von NaBr das Bromid des Farbstoffes in kristalliner Form mit 80 % Ausbeute (bezogen auf Ethyl-benzyl-m-toluidin) abscheiden.

## Patentansprüche

**1.** Farbstoffe der Formel

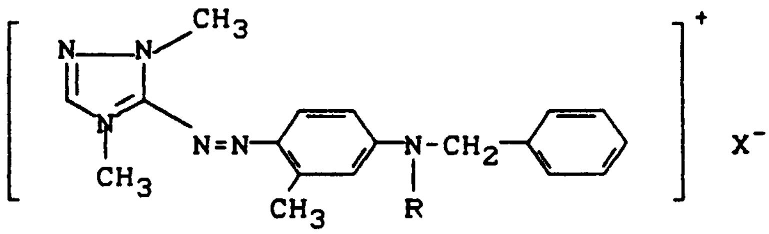

worin
R für Methyl oder Ethyl und
$X^-$ für ein farbloses Anion stehen.

**2.** Farbstoffe des Anspruchs 1, worin
$X^-$ für Methosulfat, Hydrogensulfat, Chlorid, Bromid und Chlorozinkat steht.

**3.** Farbstoffe des Anspruchs 1, worin
$X^-$ für Methosulfat steht.

**4.** Mischungen von Farbstoffen gemäß Anspruch 1 und ihren Isomeren der Formel

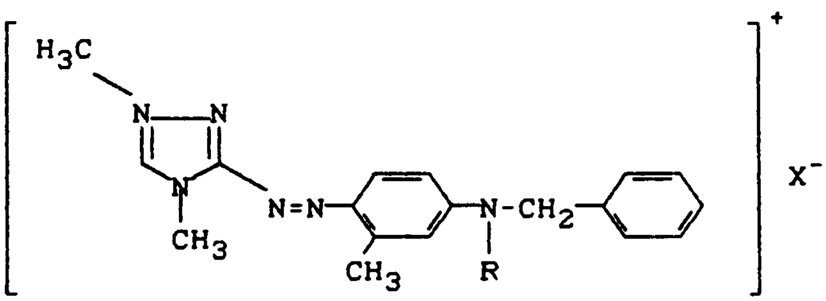

worin
R und $X^-$die Bedeutung von Anspruch 1 haben.

**5.** Verfahren zum Färben von Polyacrylnitril/Wolle-Mischungen, dadurch gekennzeichnet, daß man Farbstoffe gemäß Anspruch 1 bis 4, gewünschtenfalls in Mischungen mit anderen Farbstoffen, einsetzt.

## Claims

**1.** Dyestuffs of the formula

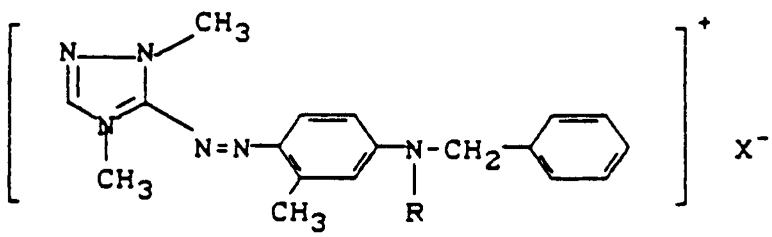

wherein
R represents methyl or ethyl and
$X^-$ represents a colourless anion.

2. Dyestuffs of Claim 1, wherein
$X^-$ represents methosulphate, hydrogen sulphate, chloride, bromide or chlorozincate.

3. Dyestuffs of Claim 1, wherein
$X^-$ represents methosulphate.

4. Mixtures of dyestuffs according to Claim 1 and their isomers of the formula

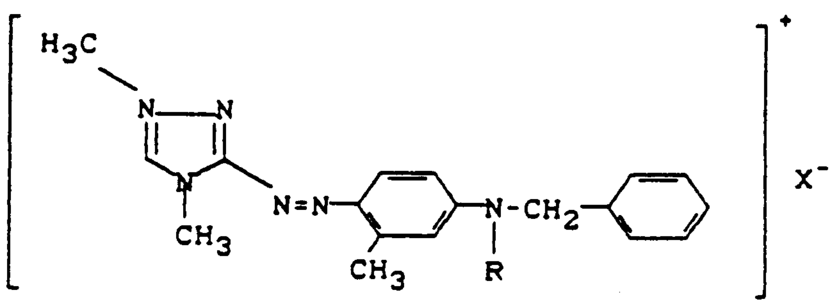

wherein
R and $X^-$have the meaning of Claim 1.

5. Process for dyeing polyacrylonitrile/wool mixtures, characterised in that dyestuffs according to Claims 1 to 4 are used, if appropriate in mixtures with other dyestuffs.

## Revendications

1. Colorants de formule

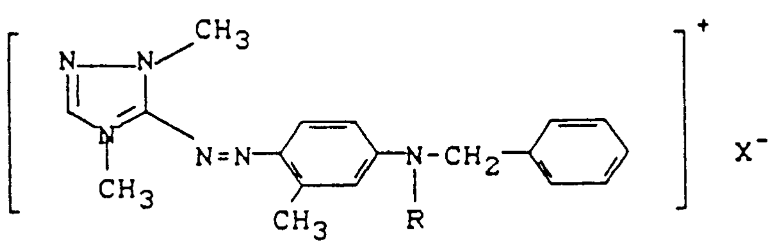

dans laquelle
R représente un groupe méthyle ou éthyle et
$X^-$ représente un anion incolore.

2. Colorants selon la revendication 1, caractérisés en ce que $X^-$ représente un anion méthylsulfate, hydrogénosulfate, chlorure, bromure ou chlorozincate.

3. Colorants selon la revendication 1, caractérisés en ce que $X^-$ représente l'anion méthylsulfate.

4. Mélanges de colorants selon la revendication 1 et de leurs isomères de formule

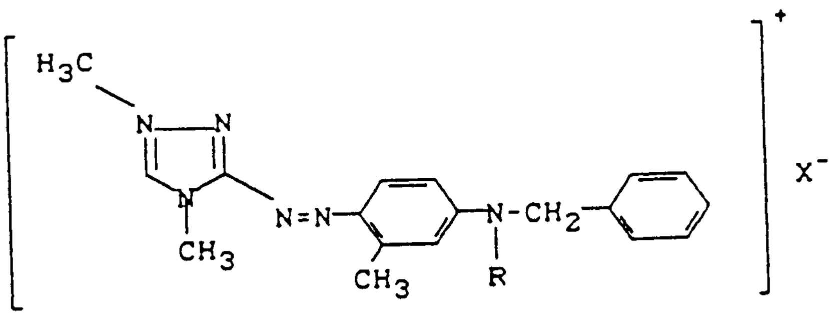

dans laquelle
R et $X^-$ ont la signification indiquée à la revendication 1.

5. Procédé pour la teinture de mélanges polyacrylonitrile/laine, caractérisé en ce que l'on utilise des colorants selon les revendications 1 à 4, si on le désire en mélanges avec d'autres colorants.